# EUROPEAN PATENT APPLICATION

(11) **EP 4 451 093 A1**
(43) Date of publication of application: **23.10.2024**
(21) Application number: 24170514.4
(22) Date of filing: 16.04.2024
(51) Int. Cl.: G06F 3/01

(54) **EXTENDED REALITY-BASED SYSTEM AND RELATED METHODS FOR GUIDING INDIVIDUALS TO AN EMOTIONALLY REGULATED FOCUSED STATE**

(30) Priority: 17.04.2023 US 202363459772 P
(71) Applicant: Stauffer, Michael, Wynnewood, PA 19096 (US)
(72) Inventor: Stauffer, Michael, Wynnewood, PA 19096 (US)
(74) Representative: Marks & Clerk LLP

(57) **Abstract**

This disclosure pertains to computer-assisted methods and apparatus generating an extended reality user interface (XRUI) by tracking movement of at least one body part of a user in space; generating in the XRUI a follow marker, the follow marker comprising a representation of the movement of the tracked user's body part; and generating in the XRUI a movement indicator, the movement indicator comprising a representation of a moving target within the XRUI; wherein motion of the movement indicator is configured to gradually transition over time from a first level of intensity to a second level of intensity.

## Description

### FIELD OF THE INVENTION

This disclosure pertains to computer-assisted methods, apparatus, and systems for treating individuals, and particularly, individuals having neuroatypical conditions, such as Autism Spectrum Disorder (ASD), Attention Deficit Disorder (ADD), and Attention Deficit Hyperactivity Disorder (ADHD), to improve such individuals' emotional and cognitive states by promoting focus and attention. It may also be used with other individuals with other conditions or individuals without any diagnosed medical conditions.

### BACKGROUND

In order to optimally participate in any task, individuals must be emotionally regulated so they may remain calm and cognitively focused so as to be able to attend, attune, and optimally participate in a given task. That is, they need to be in a regulated state.

For many neuroatypical persons, achieving and maintaining a regulated state is very difficult. Autism Spectrum Disorder (ASD) is a common neurodevelopmental disorder, and it often manifests as a neuroatypicality with regard to the skill of emotional regulation, which may manifest itself as impaired focus in a classroom and in personal communication and social interaction skills. These impairments usually lead to deficits in educational performance and challenges in performing activities of everyday living. Challenges with emotional regulation may also be an aspect of other neuroatypical conditions such as Attention Deficit Disorder (ADD) and Attention Deficit Hyperactivity Disorder (ADHD).

Accordingly, individuals who are considered neuroatypical in the skill of emotional regulation often participate in therapeutic intervention practices to promote emotional regulation. For example, in a school setting, such individuals typically participate in the school's special education program, and when they feel unfocused for schoolwork, they may visit the school's special education room to receive support. In one common example, an individual may be in a low energy' condition and lethargic and thus be in a low intensity unregulated state. In another common example, an individual may be in a 'high energy' condition and unable to stay still and focus on schoolwork and thus in a high intensity unregulated state. The special education provider will generally have only a few minutes, e.g., at most 10 minutes, to help the student emotionally regulate into a calm, energized, and focused state, i.e., into a regulated state. Such interventions may involve mindfulness practices, such as breathing practices, yoga, or meditation, or a preferred activity that promotes feelings of calm, such as gentle movement or dancing to a preferred song. Interventions that require a provider's support can be burdensome on the provider and the system, such as a school system within which the provider works. Furthermore, individuals that are neuroatypical may be highly averse to the type of social interaction with another individual that is inherent in common interventions, and can struggle greatly to calm themselves enough to even begin with an intervention such as meditation. Furthermore, such interventions are generally not interesting to the individuals and thus are difficult for the provider to implement, and extremely difficult for an individual to continue when needed outside of sessions with the provider (for example, at home).

### SUMMARY

In an embodiment, a computer-readable device comprises non-transitory instructions, which, when executed by a processor, cause the processor to perform the operations of generating an extended reality user interface (XRUI) tracking movement of at least one body part of a user in space, generating in the XRUI a follow marker, the follow marker comprising a representation of the movement of the tracked user's body part, and generating in the XRUI a movement indicator, the movement indicator comprising a representation of a moving target within the XRUI, wherein motion of the movement indicator is configured to gradually transition over time from a first level of intensity to a second level of intensity.

In another embodiment, an apparatus for assisting a user in transitioning from an unregulated emotional state to a regulated emotional state comprises an extended reality render module configured to generate an extended reality user interface (XRUI), the XRUI comprising a movement indicator, the movement indicator comprising a representation of a moving target, a tracking module configured to track movement of a sensor in space, a motion module configured to generate in the XRUI a follow marker, the follow marker comprising a representation of the movement of the sensor in space, wherein motion of the movement indicator is configured to gradually transition over time from a first level of intensity to a second level of intensity.

In yet another embodiment, a method of guiding an individual to a regulated emotional state comprises generating an extended reality user interface (XRUI), tracking movement of at least one body part of a user in space, generating in the XRUI a follow marker, the follow marker comprising a representation of the movement of the tracked user's body part, generating in the XRUI a movement indicator, the movement indicator comprising a representation of a moving target moving in a curvilinear path within the XRUI, wherein motion of the movement indicator is configured to gradually transition over time from a first level of intensity to a second level of intensity.

### BRIEF DESCRIPTION OF THE DRAWINGS

A more detailed understanding may be had from the detailed description below, given by way of example in conjunction with the drawings appended hereto. Figures in such drawings, like the detailed description, are exemplary. As such, the Figures and the detailed description are not to be considered limiting, and other equally effective examples are possible and likely. Furthermore, like reference numerals ("ref.") in the Figures ("FIGS.") indicate like elements, and wherein:
FIG. 1 is a diagram illustrating a semi-conceptualized graphical user interface for providing an intervention shown in third-person view in accordance with embodiments;
Fig. 2 is a system diagram showing an exemplary network computing environment in which the present invention may be employed;
Fig. 3 is a schematic block diagram illustrating an exemplary and non-limiting embodiment of a computerized system in accordance with the present invention;
Fig. 4 is a chart showing exemplary changes in the musical and movement qualities over the course of a gameplay level, starting from either a low or high intensity level corresponding to a user's starting emotional state toward a more moderate level;
Fig. 5 is a chart showing an exemplary change in a user's emotional state over the course of a gameplay level, starting from either a low or high intensity unregulated state toward a more moderate state;
FIG. 6 is a diagram illustrating a semi-conceptualized graphical user interface for providing an intervention in a second alternate mode shown in third-person view in accordance with embodiments; and
FIG. 7 is a flowchart illustrating operation in accordance with an exemplary embodiment.

### DETAILED DESCRIPTION

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components, and circuits have not been described in detail, so as not to obscure the following description. Further, embodiments and examples not specifically described herein may be practiced in lieu of, or in combination with, the embodiments and other examples described, disclosed, or otherwise provided explicitly, implicitly, and/or inherently (collectively "provided") herein.

U.S. Provisional Patent Application No. 63/419,567, which discloses extended reality-based systems and methods for training individuals in social mirroring skills, is incorporated herein by reference in its entirety.

Since individuals who struggle with emotional regulation experience detrimental effects in their educational and personal lives, a quick, effective, fun, and engaging method and apparatus is desired to support such individuals to regulate emotionally.

In embodiments, a person is supported in the process of emotional regulation via interventions that use an extended reality (XR) system comprising methods and apparatus that promote the person's emotional regulation with minimal interaction with a trainer, therapist, or other provider.

The term extended reality (or XR) is used herein as a catch-all phrase to encompass virtual reality (VR), augmented reality (AR), mixed reality (MR), and variations thereof. VR broadly refers to methods and apparatus wherein an individual is completely immersed in a sensory experience with no input from the physical world. The immersion is commonly limited to the visual sense, to the visual and auditory senses, or to the visual, auditory and touch senses. Thus, for instance, a VR experience typically would require the wearing of a headset that completely shields the wearer's eyes (and/or ears) from stimulus from the physical world and only allows the wearer to see what is projected via the VR headset (and/or hear what is produced by the headset`s headphones or speakers. As technology advances, however, it may become common to extend the experience to include additional senses, such as taste, and smell. In order to interact with the virtual environment, the individual may further wear or carry transducers (typically gloves or handheld devices that are often called "controllers" in gaming parlance) that the VR apparatus can track in space (e.g., via motion sensing equipment, such as 3-axis gyroscopes, 3- axis accelerometers, and/or 3-axis electronic compasses, in the controllers and/or cameras pointed toward the controllers) that detect the movement of the controllers and then project some representation of that movement into the VR display scene. For instance, the individual may wear gloves that are tracked via the VR system and, within the VR scene, a pair of hands are shown with movement commensurate with the movement of the gloves (i.e., the person's hands). In other embodiments, cameras may track the individual's hands without the need for the individual to wear or hold any particular controller.

Augmented reality, on the other hand, allows at least some sensory stimulus from the physical world to be combined with virtual sensory stimulus provided by the headset. A typical configuration for an AR experience is a pair of eyeglasses that allow the wearer to see the physical world, but also projects some virtual elements onto the lenses of the glasses so that the wearer sees both the physical world as well as the virtual elements. Of course, the same mixing of sounds from both the physical world and sounds produced by headphones also may be a feature of an AR user interface.

Mixed reality is similar to AR, but wherein the virtual elements can interact with the real-life elements and the user can interact with the virtual elements.

Note that, as an alternative to the above-described embodiments of AR and MR, in which the user sees the real world directly through a pair of see-through glasses, in other embodiments, AR and MR systems may utilize a full headset that blocks out all direct visual (and/or audio) stimulus from the physical world, but captures such stimuli from the physical world via cameras and/or microphones, respectively, and then feeds those captured images or sounds into the headset via projection and/or speakers, respectively, to be combined with virtual stimuli.

Herein, the term gameplay level is used to refer to a collection of movement indicators that are presented to the student for the student to follow, possibly with accompanying music. This is the core gameplay of the experience.

In an embodiment, a computer-generated, 3-dimensional XR experience is created that the user (hereinafter sometimes referred to as the "student" or "user") experiences (e.g., sees and hears) and that guides the student through an intervention designed to promote emotional regulation. The regimen may be presented in the form of gameplay such that the individual essentially considers the experience to be one of playing an entertaining game, rather than an intervention.

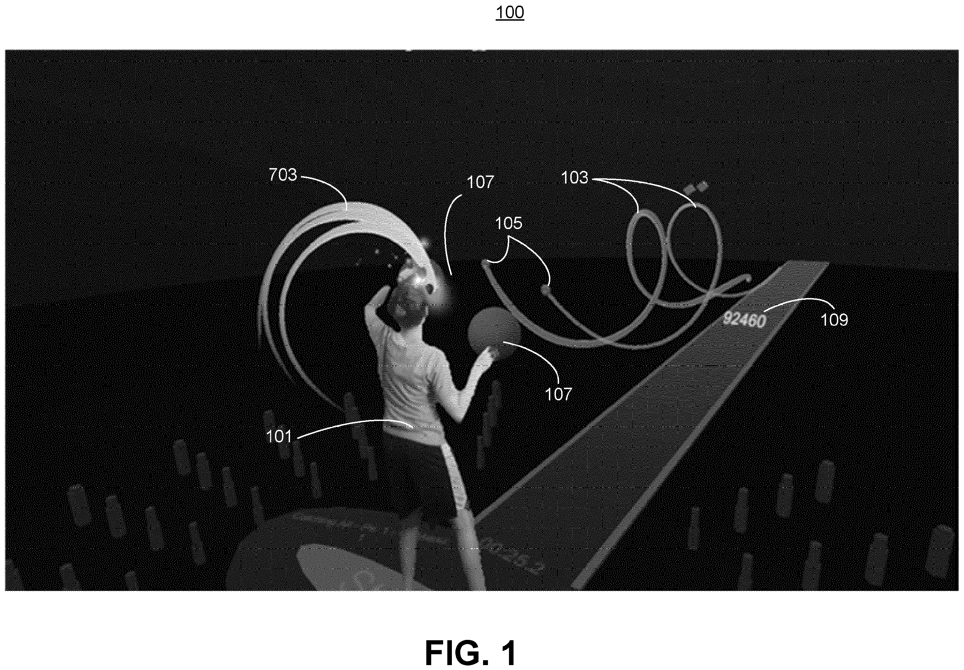

As will be described in more detail below, in one exemplary embodiment, the student wears an XR headset and holds or wears trackable sensors in or on his/her hands (or other body parts, as will be discussed further below). In a first form of use, the system presents the student with an XR user interface comprising a visual pattern that the student has to follow with his/her hands (sometimes referred to as a movement indicator). FIG. 1 shows an example of the concept. Thus, for instance, the student 101 may be presented with two movement indicators, e.g., flowing lines 103 moving toward him, wherein the goal is for the student to move his/her hands so that they track the paths as the paths reach the student's virtual hands within the XR display. The system may capture data as to the performance of the student (e.g., accuracy in following each movement indicator 103) and may even show a score 109 to the student during game play.

It should be understood that FIG. 1 shows the XR environment as if a third-party were viewing it from a vantage point behind the actual user, rather than as the actual participant would see it. FIG. 1 shows the virtual environment in this manner because it is believed to more clearly demonstrate the concepts being discussed herein. It should be understood that, in a typical XR presentation, in order to most closely emulate real life, most VR displays would show to the given participant only a virtual representation of the portions of that participant's body parts the XR system is able to track and that are relevant to game play. Of course, some embodiments may permit another person to participate in the XR experience (e.g., the therapist), and that person may be presented with an XR environment that looks much like what is seen in FIG. 1.

Furthermore, it should be understood that while the embodiments discussed herein generally focus on using one's hands to follow the virtual stimuli, it is equally possible, and, in fact, desirable, to perform the intervention using other body parts as well (e.g., feet, elbows, head, eyes, etc.). In some embodiments, part of the intervention may involve adding or switching between body parts that must be used to follow additional movement indicators presenting in the XRUI. In yet other embodiments, one also may be asked to copy or mirror facial expressions as part of more advanced gameplay.

In an embodiment, the hardware portion of the apparatus may comprise largely conventional XR hardware, such as a VR, AR, or MR audio/visual headset and one or more handheld trackable sensors (e.g., controllers). In more complex configurations, external cameras may be pointed at the student instead of or in addition to the trackable sensors to capture the movements of the student for purposes of emulating it in the XR display. In an embodiment, the software or firmware that causes the hardware to perform all of the functionality described herein may be provided as a plug in module to the headset, as software that is loadable onto to a computer that runs the hardware (which may be within the headset or external to it and connected to the headset via wires or wirelessly (e.g., via Wi-Fi or Bluetooth), or may be cloud-based software that controls the headset via a communication network wirelessly or via wires.

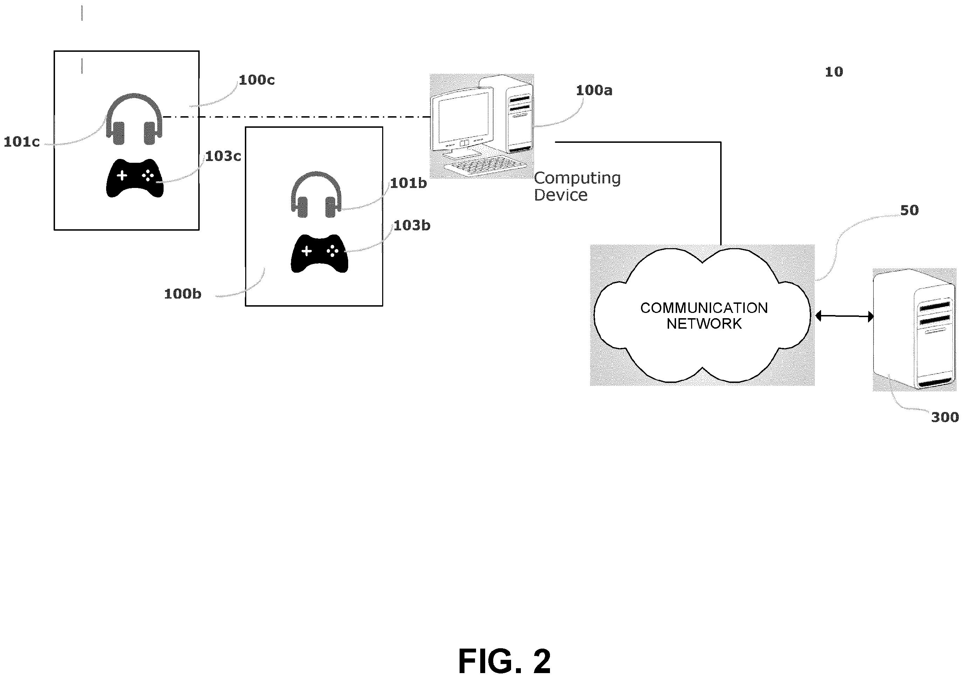

Fig. 2 is a system diagram showing an exemplary computing environment in which embodiments may be employed. As shown, the exemplary network environment 10 may include certain conventional computing hardware and software for communicating via a communications network 50, such as the Internet. FIG. 2 illustrates an example in which at least some of the software for generating the XR user interface is cloud -based. It also illustrates a configuration in which the XR rig 100b (which may comprise a headset 101b and one or more controllers 103b) is independent in the sense that it includes all of the hardware and software needed to render the XR user interface based on any data received via the network from, e.g., a cloud server 300. Finally, it further illustrates an alternate configuration in which XR rig 100c (which may comprise a headset 101c and one or more controllers 103c) is not independent, but rather is controlled by a separate computing device 100a which may be connected to 100c either wirelessly or via wired connection, and which may receive data from the server 300 via the network 50 to transmit to the XR rig 100c.

Computing device 100a which may be, for example, a personal computer/PC, laptop computer, tablet computer, smartphone, or other computing system hardware, including computerized/networked communication hardware/software/functionality, such as computer-based servers, kiosks and the like, or other so-called "connected" communication devices having communication capabilities for communicating data via the network.

In accordance with certain embodiments, devices 100a, 100b, 100c are configured to store and execute one or more "apps" or other purpose-specific application software for rendering the XR user interfaces and enabling the other features discussed herein.

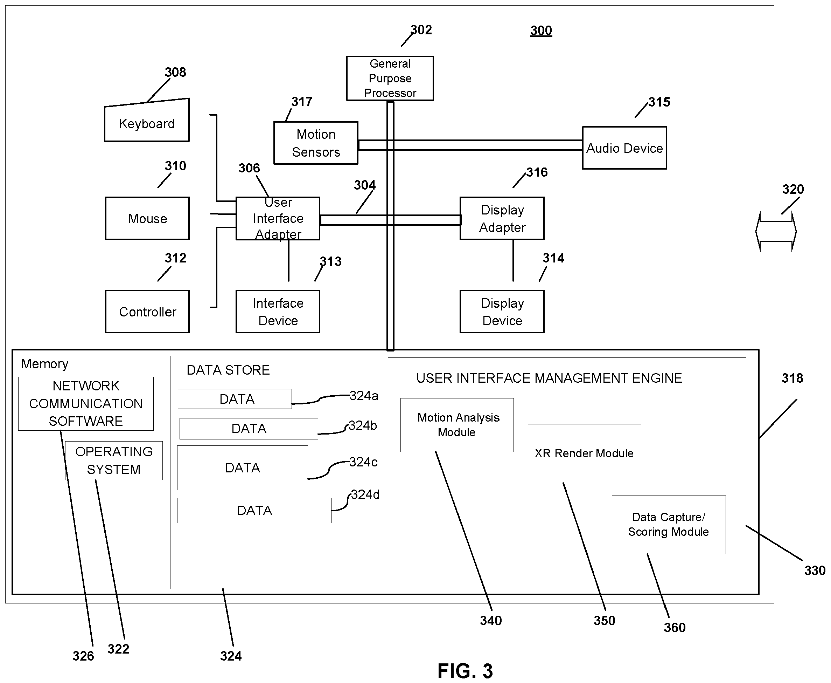

Hardware and software for enabling communication of data by such systems via such communications networks are well known in the art and beyond the scope of the present invention, and thus are not discussed in detail herein. FIG. 3 is a schematic block diagram showing the primary components of a system configuration in accordance with an exemplary embodiment, It should be understood that the individual components shown in FIG. 3 are representative of the components that might be found in any of the physical configurations mentioned or made obvious herein, such as (1) a self-contained XR rig in which all of the hardware as well as software for generating the XR user interface is stored in the rig itself without the need to receive any data in real-time via external sources (such as the network 50), (2) the combination of computer 100a and XR rig 100c connected to server 300 via a network shown in FIG. 2, (3) the independent controller 100b connected to server 300 shown in FIG. 2, and (4) a combination of a computer and an XR rig without the need to receive any data in real-time via external sources (such as a network). The only significant different between the various configurations being the various components might be contained within different physical devices (e.g., some components might be found in computer 100a, other components might be found in rig 100c, and yet other components might be found in server system 300).

The rig 300 is a special-purpose computer system that includes conventional computing hardware storing and executing both conventional software enabling operation of a general-purpose computing system, such as operating system software, network communications software, and specially-configured computer software for configuring the general purpose hardware as a special-purpose computer system for carrying out at least one method in accordance with the present invention. By way of example, the communications software may include conventional web server software, and the operating system software may include iOS, Android, Windows, Linux software.

In some embodiments, the system 300 may, for example, execute, process, facilitate, and/or otherwise be associated with the embodiments described herein.

Accordingly, the exemplary system 300 includes a general-purpose processor, such as a microprocessor (CPU), 302 and a bus 304 employed to connect and enable communication between the processor 302 and the components of the XR interface hardware in accordance with known techniques. According to some embodiments, the processor 302 may be or include any type, quantity, and/or configuration of processor that is or becomes known. In some embodiments, the processor 302 may comprise multiple interconnected processors, microprocessors, and/or micro-engines. According to some embodiments, the processor 302 (and/or the system 300 and/or other components thereof) may be supplied power via a power supply (not shown), such as a battery, an Alternating Current (AC) source, a Direct Current (DC) source, an AC/DC adapter, solar cells, and/or an inertial generator.

The exemplary system 300 includes a user interface adapter 306, which connects the processor 302 via the bus 304 to one or more interface devices. In a system that includes a separate computing device, such as computing system 100a in FIG. 2, the interface devices might include keyboard 308 and mouse 310. The aforementioned handheld controller(s) or glove(s) also are interface devices 312. For example, the system might generate and display options and/or prompts within the XR display that a user can select or otherwise interface with using a controller. Other possible interface devices 313 include a touch-sensitive screen, a digitized entry pad, etc.

The bus 304 also connects one or more display devices 314, such as LCD screens or projectors for rendering 3-D images to the user, to the processor 302 via a display adapter 316.

The bus 304 also connects one or more audio devices 315, such as speakers and microphones for rendering the audio aspects of the 3-D interface to the user, to the processor 302.

The bus 304 also connects the processor 302 to a memory 318, which can include a hard drive, a solid-state drive, an optical drive, a diskette drive, a tape drive, etc. The memory 318 may comprise any appropriate information storage system that is or becomes known or available, including, but not limited to, units and/or combinations of magnetic storage systems (e.g., a hard disk drive), optical storage systems, and/or semiconductor memory systems, such as RAM systems, Read Only Memory (ROM) systems, Single Data Rate Random Access Memory (SDR-RAM), Double Data Rate Random Access Memory (DDR-RAM), and/or Programmable Read Only Memory (PROM).

The memory 318 may, according to some embodiments, store one or more software components. Any or all of the exemplary instructions and data types described herein, and other practicable types of data may be stored in any number, type, and/or configuration of memory systems that is or becomes known. The memory 318 may, for example, comprise one or more data tables or files, databases, table spaces, registers, and/or other storage structures. In some embodiments, multiple databases and/or storage structures (and/or multiple memory systems) may be utilized to store information associated with the system 300. According to some embodiments, the memory 318 may be incorporated into and/or otherwise coupled to the system 300 (e.g., as shown) or may simply be accessible to the system 300 (e.g., externally located and/or situated). The memory may store network communication software 326 and operating system software 322.

The rig 300 may communicate with other computers or networks of computers, for example via a communications channel, network card, modem, or transceiver (collectively, "transceiver") 220. In some embodiments, the transceiver 220 may comprise any type or configuration of communication system that is or becomes known or practicable. The transceiver 220 may, for example, comprise a Network Interface Card (NIC), a telephonic system, a cellular network system, a router, a hub, a modem, and/or a communications port or cable. According to some embodiments, the transceiver 220 may also or alternatively be coupled to the processor 302. In some embodiments, the transceiver 220 may comprise an IR, RF, Bluetooth^{™}, Near-Field Communication (NFC), and/or Wi-Fi^{®} network system coupled to facilitate communications between the processor 302 and a network (not shown). The system 300 may be associated with such other computers in a local area network (LAN) or a wide area network (WAN), and may operate as a client in a client/server arrangement with another computer, etc. Such configurations, as well as the appropriate communications hardware and software, are known in the art.

The system 300 is specially configured in accordance with the present invention. Accordingly, as shown in Fig. 3, the system includes computer-readable, processor-executable instructions stored in the memory 318 for carrying out the methods described herein. Further, the memory 318 stores certain data, e.g., in one or more databases or other data stores 324 shown logically in Fig. 3 for illustrative purposes, without regard to any particular embodiment in one or more hardware or software components.

Further, as will be noted from Fig. 3, the system 300 includes, in accordance with the present invention, a User Interface Management Engine 330, shown schematically as stored in the memory 318, which includes a number of additional modules 340, 350, 360 for providing the special-purpose functionality for supporting individuals in emotional regulation, etc. as discussed in detail herein. These modules may include, for instance, a module 350 for producing and rendering the XR environment in the headset. These modules may include, for instance, a module 340 for analyzing the detected motion and operation of the headset and/or controllers in order to adjust the display and sound according to the student's head movement and controller movement and operation. These modules may include, for instance, a module 360 for capturing the data indicative of the student's performance and generate a score. These modules may be implemented primarily by specially-configured software including microprocessor-executable instructions stored in the memory 318 of the system 300. Optionally, other software may be stored in the memory 318 and and/or other data may be stored in the data store 324 or memory 318.

Although the terms "step", "block", "module", "engine", etc. might be used herein to connote different logical components of methods or systems employed and/or for ease of illustration, the terms should not be interpreted as implying any particular order among or between various steps herein disclosed unless and except when the order of individual steps is explicitly described, or be interpreted as implying any distinct structure separate and apart from other structures of the system.

Referring again to FIG. 1, the system generates and renders an XR environment (e.g., a graphical and/or auditory user interface) that includes one or more of the following user interface elements as described herein below.

Referring again to FIG. 1, the system may be configured to control the user interface (Ul) to render one or more movement indicators of some kind (visual, auditory), e.g., flowing lines indicator 103, that guide the student to make particular movements by following the movement indicators with one or more body parts (e.g., hands). The flowing line movement indicators 103 flow/move toward the student and indicate to the student where the student's hands (or other body part, as the case may be) should be at the current moment via a movement target 105 at the near end of the flowing line movement indicator 103.

Each movement target 105 indicates where the student's corresponding body part should be located in space at the current moment. It is the primary target that the user is trying to follow with their "follow marker" 107. The follow marker 107 is the XR representation of the body part (e.g., hand) that the student is using to try to follow the movement indicator. For example, a partially transparent sphere 107 may be centered on the body part, such that it moves with the student's real-world body part. The student's goal is to align each follow marker 107 with the appropriate movement target 105 of each movement indicator 103.

The movement indicator 103 also may indicate to the student where the student will need to move in the immediate future, i.e., the portions of the movement indicators 103 that are farther away from the movement target portion 105 of the movement indicator 103 (as seen from the student's perspective). There may be multiple movement indicators, each meant to be followed by a different body part, e.g., the user's hands, head, feet and/or other body parts, depending on the options available for the XR system, and the options chosen by the system operator.

The movement indicator 103 shows a rendering of a visible portion of a larger movement path that is plotted out by the software. Particularly, a movement indicator 103 is the portion of movement path that is represented in the XR environment at any given moment in time. The movement path controls the path that a movement indicator follows and visualizes. It is the path that the student is being prompted to follow via the movement indicator 103 and movement target 105. At any given moment, there may be (1) a portion of the movement path that has already "passed" the user (and which may no longer seen in the XRUI, but which had previously been represented by the movement indicator 103), (2) a portion of the movement path that is represented by the movement indicator 103, and (3) a portion of the movement path that is too far in the future to yet be displayed as part of the movement indicator 103). In other embodiments, however, the movement indicator may be configured to actually show some portion of the movement path that has already "passed by" the student.

The movements of a movement indicator 103 are dictated by the corresponding movement path.

A timeline controls the visual placement of movement indicator components, with the position of items at the current time always within reach of the student. In some embodiments, future times are farther away from and in front of the student, and past times are positioned behind the current time and ultimately behind the student. The movement target is always set to be visualized at the current time position.

In certain embodiments, there may be at least three types of movement paths, namely, a recorded path, a live path, and a procedural path. A recorded path is a type of movement path made any time before its use and loaded at runtime to control the path of the movement indicator 103. It may be preconfigured in the system, created by a therapist, provider, trainer, or otherwise, and saved, or created by a different person (and may be shared via an online portal created for sharing paths). The movement paths may be recorded within the system in a recording mode during which the path creator, typically listening to a music recording, moves and the system records their movements to generate movement paths.

Live paths are created on the fly by another player within the experience for the student to follow. For instance, a therapist can control the movement indicators in real-time during the intervention via the therapist's own movements. The therapist's follow markers 107 may become aligned with the therapist's movement targets, or they may not be shown at all. For example, with the flowing lines type movement indicators shown in FIG. 1, the lines 103 may emanate from the therapist's hands as they move and flow towards the student for the student to follow. If music or other auditory input is included in the XR environment (as discussed in more detail below), the student's music playback time should be delayed relative to that of the therapist by a period equal to the time it takes for a given movement of the therapists follow marker down the movement path 103 to the students reach the student's movement target 105, such that the follow markers 107 of both participants are moving to the music playback for each participant with the same timing (if the student is following accurately). This last aspect is important for maintaining auditory synchronization between the creation of the live path and the student's following thereof.

A procedural path is a movement path generated by the system algorithmically. It may use portions of recorded paths and modify them algorithmically, or it may generate the path completely algorithmically, or by some combination of the two methods. The parameters of the algorithms may be modified by the therapist to create paths of different difficulties and/or with different movement goals.

In an embodiment, the system may be configured to permit spatial scaling of all of the types of movement paths so that the movement paths will always be within the reach of the student, regardless of the participant's size and/or physical limitations via a process termed reach mapping. In an embodiment, a human participant's reach mapping is created by the system through either a simple or more thorough procedure to determine how far they can reach with each body part within the surrounding space. In a simple procedure, one measures the participant's height (whether standing or sitting), shoulder height, and arm length and scales the movement path according to those measurements.

In a more thorough procedure, one may measure the participant's ability to reach all regions in the surrounding space, and accounts for possible limitations of movement of different body parts in different directions. For example, a participant may not be able to move their arms above their shoulder height. Once a 'reach mapping' has been generated, all Movement Paths may be scaled such that every part of the path will be reachable by the participant, and the details of the shape of the path may be preserved as much as possible. For example, a 6-foot tall, non-movement-restricted therapist may create a recorded path for hand movements, part of which involves sweeping arm movements that reach high overhead. If a 4' 6", non-movement-restricted child then attempts to follow this recorded path, all of the spatial locations within the path will be scaled to be within reach of the child, yet still lead to the same relative arm movements as the child follows the path, including the sweeping overhead movements. If, on the other hand, a child with one movement-restricted arm and one non-restricted arm attempts to follow the paths, the path for the movement-restricted arm will further be modified to always be within reach of the child, while maintaining as much as possible the motion dynamics of the original path.

In one embodiment, in operation, the system will lead the student through an intervention consisting of one or more gameplay levels that are designed to promote emotional regulation within the student and lead the student to a regulated state in which the student is better prepared for schoolwork, social interaction, or other tasks that may otherwise be more challenging when in an unregulated state. The gameplay levels may be comprised of music and movement indicators that start with an intensity that matches the student's emotional state, and gradually change to guide the student into a regulated state. The student may begin the intervention in a high-intensity unregulated state, in which case the music may start as loud, energetic, high tempo, busy, or with other appropriate qualities generally associated with high-energy music, and the movement indicators may begin such that they guide the student through movements that are fast, large, rapidly changing, highly percussive (e.g., quick, short, and/or sudden), highly variable, or with other qualities generally associated with high-energy movement.

As the level progresses, the music and movement indicators gradually become less energetic, until, at the end of the level, both components have qualities such as being mid-tempo, moderate intensity, and other qualities otherwise generally associated with focused and calm behaviors, i.e., a regulated state.

In another embodiment, the student may begin the intervention in a low-intensity unregulated state, feeling perhaps lethargic or unmotivated, in which case the music may start as quiet, slow tempo, arhythmic, slowly flowing, or with other appropriate qualities generally associated with slow, gentle music and low-energy moods, and the movement indicators may begin such that they guide the student through movements that are gentle, flowing, arhythmic, lyrical, or with other appropriate qualities generally associated with slow, gentle movements. As the level progresses, the music and movement guides may gradually become more energetic until, at the end, both components have qualities such as mid-tempo, moderate intensity, and other qualities otherwise generally associated with focused and calm behaviors, i.e., a regulated state.

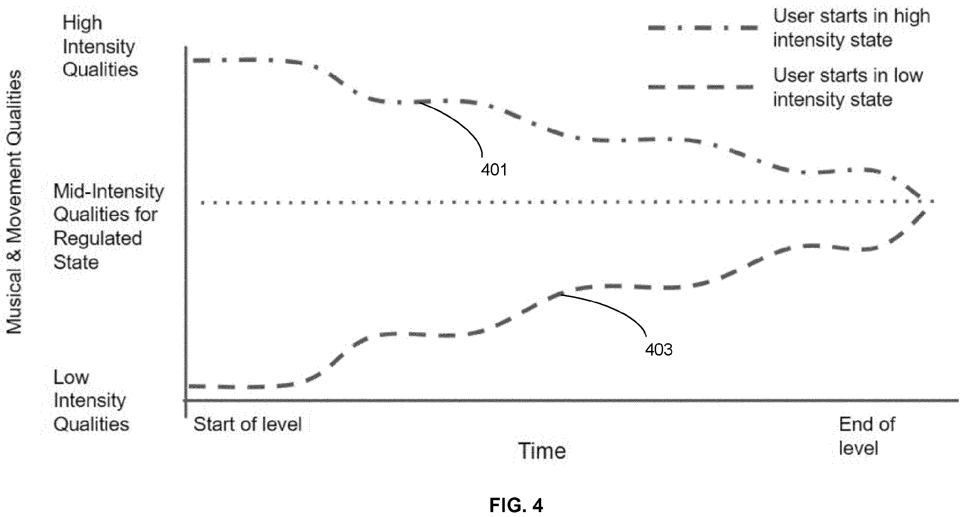

FIG. 4 shows exemplary plots of the music and movement guide qualities during the use of the intervention. For instance, plot 401 represents the qualities of the music as a function of time that might be used in connection with students that start off in a high intensity unregulated state and must be brought down to a regulated state. As can be seen, the music may start with high intensity qualities to correspond to the student's high intensity emotional state. This may comprise loud and/or intense music with a fast beat, staccato notes, and/or rhythms comprising 16^{th} notes. Over the period of treatment, the music may be varied to slowly bring the intensity down to less intense qualities, such as softer and slower music with more mellifluous melodies and rhythms. The movements of the movement indicators would change in intensity in a similar manner to the music. For instance, the movement indicators may start out including many percussive, large scale, and/or quick movements and gradually decrease in intensity to slower movements, movements of smaller scale, and containing fewer percussive movements.

On the other hand, plot 403 represents the qualities of a musical piece as a function of time that might be used in connection with students that start off in a low intensity unregulated state and must be brought up to a regulated state. As can be seen, the music may start with low intensity qualities to correspond to the student's low intensity emotional state. This may comprise low volume with a slow beat, notes that flow into each other, and/or little or no percussive sounds. Over the period of treatment, the music may be varied to slowly bring the intensity up to more intense qualities, such as louder and faster music with some percussive elements. The movements of the movement indicators would change in intensity in a similar manner to the music. For instance, the movement indicators may start out including few, if any, percussive movements and to have small scale and slow movements and gradually increase in intensity to faster and quicker movements containing many percussive movements.

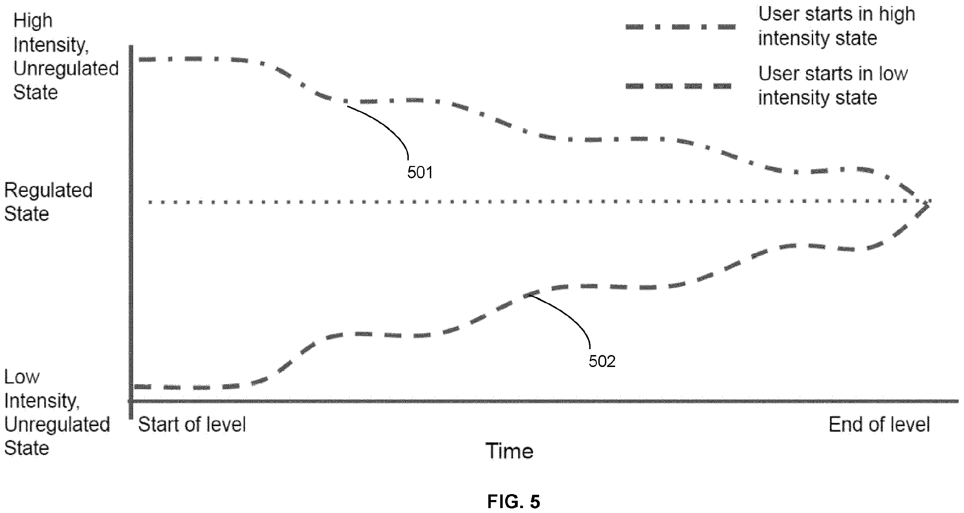

FIG. 5 shows exemplary plots of the student's expected emotional state as a function of time during the use of the interventions having the qualities of the plots 401 and 403 of FIG. 4, wherein plot 501 corresponds to plot 401 of FIG. 4 and plot 502 corresponds to plot 403 of FIG. 4. As can be seen, hopefully, the students emotional state transforms over the treatment time in a manner that follows the transformation in the music and motion indicators to bring the student from a high intensity state (plot 501) or low intensity state (plot 502) to a more moderate regulated state.

The musical and movement qualities may be designed or selected following the tenets of the iso principle from the field of music therapy, in which a therapeutic intervention may start with music (and movements in the case of this invention) that matches the current mood of the patient, and then gradually shift to represent a desired mood or emotional state. A discussion of the iso principle is available in: Use of the Iso Principle as a Central Method in Mood Management: A Music Psychotherapy Clinical Case Study; Annie Heiderscheit, PhD, MT-BC, Amy Madson, MA, MT-BC; Music Therapy Perspectives, Volume 33, Issue 1, 2015, Pages 45-52, https://doi.org/10.1093/mtp/miu042, which is incorporated herein fully by reference.

The music and movement qualities may be designed or selected following other principles or methodologies, depending on the expertise and needs of the creator of the gameplay level and intended user, so long as those qualities are adapted to achieve a desired emotional state within the student.

The system leverages characteristics of VR to create a controlled, immersive environment that can be tailored for a student's comfort and interest.

In some embodiments, in order to better motivate the student/player and to provide positive feedback, the system may measure the performance of the student (i.e., his success in closely following the movement indicator patterns), called 'follow success', and provide a score for each game segment, such as shown at 109 in FIG. 1.

For instance, follow success may be measured by the system by evaluating a movement indicator to be successfully followed by the student when the student aligns his/her follow marker in space with the appropriate movement target within a specified tolerance, e.g., as a function of the distance between the center of the student's follow marker 107 and the visual boundary of the movement target 105. Different tolerances may be applied to the evaluation of success.

The accuracy may be used in providing scaled success feedback to the student. For instance, in some embodiments, the controller(s) may be configured to vibrate when the student's follow marker 107 is within a certain distance of the center of the movement target 105 and the intensity of the vibration may be made greater the closer the student's follow marker 107 is to the center of the movement target 105. In other embodiments, rather than vibration of the controller(s), the scaled feedback may comprise audio or visual cues, such as color changes or volume changes of sound effects.

The follow successes of all the movement indicators presented during the course of a gameplay level may be aggregated into a collection of values and presented as a level success score. There also may be overall scores for aggregating statistics about how the student performed across all movement indicators. There also may be scores that hold statistics about how the student performed in particular ways, for example, how well the student performed with each body part or how well the student performed at following movement indicators as they moved in particular ways to train particular types of movements, such as crossing the student's midline or any other particular movement-type that may be help for the therapist to analyze.

The system may provide continuous and/or discrete success feedback (for example visual, haptic, auditory, scoring, or some combination of all) to indicate to the student how well the student is following each movement indicator. A final score may be shown at the end of a session based on the success during the session.

The system may be configured to control speakers (headphones) in the headset for playing music, sound effects, and/or other auditory output, including possible gameplay cues (e.g., sounds that accompany and correspond to certain motions of the follow cue 105, such as a certain drum beat sound effect that occurs every time you are supposed to move your hand down quickly for a short distance, e.g., like hitting a drum head or hammering a nail) , as part of the XR experience in order to make the intervention more pleasurable and/or exciting.

Music may be provided that is synchronized to the visual aspects of the XR experience, e.g., the movement indicators change color as the dominant musical instrument changes, the size of the motions increase with the primary pitch or loudness of the music, the movement indicators speed up or slow down with the tempo or volume of the music, the music may crescendo as one completes a difficult portion of gameplay. In some embodiments, the movement indicators may be designed to cause the player to mimic the motions that an orchestral conductor might make to conduct the music that is being heard, etc. The movement indicators may be configured to lead the player to follow a path via movements that are typically flowing and 'lyrical'. The music may be synchronized with the movement indicators such that they create a sense in the user of dancing or moving to the music as the user follows them. The synchrony with the music may be created at least in part by computer algorithm via musical analysis in the case of movement indicators.

The system may be configured to control the display to render a second type of movement guide indicator interspersed within or between the flowing lines movement indicators 103 that are of a more percussive nature and that lead the student to perform smashing/punching type motions and/or more forward/backward type motions. Percussive-type movement guide indicators lead the player to more rhythmic movements, such as smashing or hitting objects, e.g., to emphasize a rhythmic phrase in the music or a sound effect. Thus, in an embodiment, in addition to the flowing lines type movement indicators, the system may control the display and audio components to further include special "percussive" movement indicators e.g., balls or rotating cubes. The percussive movement indicators may or may not appear within the flowing line type movement indicators 103. In an embodiment, the student must "smash" the percussive movement indicators when they arrive within reach of the student by rapidly moving a hand through the percussive movement indicator as it approaches., e.g., making some quick motion, such as a slicing, hammering, or punching motion. The system may control the audio components of the system so that these percussive guide indicators are accompanied by a particular rhythmic phrasing within the music or an explosive sound effect to make it more entertaining. In some embodiments, the system may control the audio components of the system to generate a particular musical phrase or sound effect if the student successfully "smashes" the percussive movement indicator (or performs any other specific motion successfully). In some embodiments, the system may be configured to control the display components of the system to cause the visual presentation of the virtual image of student's hands to be temporarily altered (e.g., turned into a sphere, hammer, boxing glove, etc., or may be increased in size) just before the percussive movement indicator must be "smashed" in order to serve as a visual cue to perform a "smash". In some embodiments, additionally or alternately, the system may be configured to control the audio components of the system to generate an auditory cue to perform a "smash", such as a particular sound effect. In some embodiments, different types of percussive guides may be provided along with real-time movement dynamics analysis in order to expand the type of movements. For instance, different visual representations of percussive guide indicators may correspond to different types of percussive motions that the student must perform. For instance, a cube might correspond to a punching motion that must be performed, whereas a sphere corresponds to a dabbing type of motion that must be performed, and a pyramid corresponds to a slashing type of motion that must be performed. The visual appearance and dynamic behavior of each percussive movement guide indicator may be tailored to evoke the targeted movement type.

In some embodiments, the system may be configured to control the display components of the system to cause the percussive movement indicators to appear separate from the flowing line type movement indicators 103.

Students will be motivated to participate and succeed because it is a fun game that gives visual, auditory, tactile, and score-based feedback as they play. The system may be used in special education programs at schools, for home-use following therapist recommendation, and at private clinics serving the same population as special education programs.

The student may receive a real-time score during gameplay, wherein the score relates to how well the player has 'caught' the music by following and/or smashing the various movement indicator.

In some embodiments, the intervention can be undertaken simultaneously with multiple students, each with his/her own XR rig and personal avatar arranged separately from each other in same virtual space. The multiple students may be in the same physical space or may be joining the shared XR experience remotely from different locations over a computer network.

In some embodiments, the XR headset may include cameras within the headset to observe the student's eyes and eye tracking software to track where the student is looking. This data can be used to analyze the student's capabilities with regard to looking at and visually following additional game elements. The system might be configured to insert visual and/or auditory clues into the presentation to indicate the need to follow certain visual elements in the XR environment with one's eyes, and/or to include success feedback of different types when it is done correctly, including scoring.

The flowing lines type movement indicators discussed and shown so far in this disclosure work very well for leading players into following paths in the frontal plane (up/down and left/right), but may not work as well for leading players to follow forward/backward motions (i.e., as are part of the sagittal and transverse planes). They are also limited in how well they can guide players to closely follow movements with varying speed. It is important to lead the player through a complete range of motion and through a range of movement dynamics to reach higher degrees of attention and sensory regulation required for optimal emotional regulation.

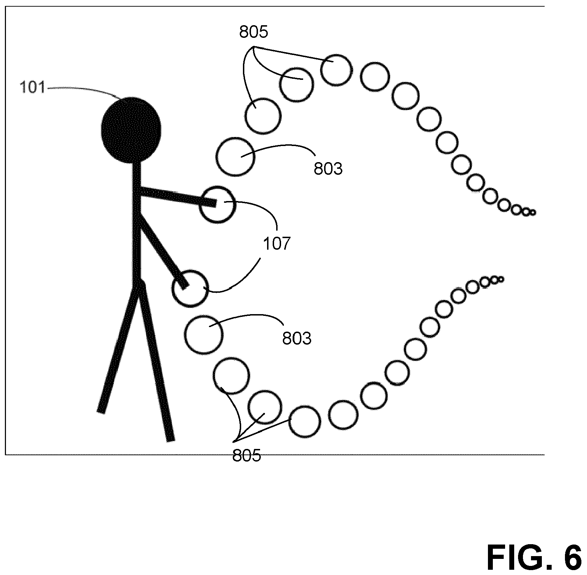

Thus, in some embodiments, such as illustrated by FIG. 6, the movement indicator may take the form of a sphere 803 or other object (for example, a hand or airplane) that moves through the virtual space, wherein the student 101 must follow its motion by aligning the appropriate follow marker 107 with the sphere 803. The sphere indicator 803 may also show the student where and how fast the sphere will be moving in the near future by extending some sort of visual sign in the direction of the upcoming movement. For instance, a series of smaller secondary orbs that move out along a path from the sphere 803, with each secondary orb getting smaller as it shows the indicated movement further into the future, such as illustrated at 805 in FIG. 6. For example, if a user is meant to follow the sphere 803 with a hand, when the user is meant to keep their hand in one place, the system may generate a display that shows only the main sphere 803. If the user is meant to soon move their hand to the left, the system may generate a display that shows smaller orbs 805 moving out to the left of the sphere 803 in anticipation of the movement. The faster the upcoming movement, the faster and further out the smaller orbs 805 will move, acting as an indication of upcoming movement speed as well as direction.

In some embodiments, the visual characteristics of the object that is used by the student to follow the movement indicator (e.g., sphere 803 in FIG. 6 or follow marker 107 in FIG. 1) may be chosen by the student or the therapist from a number of choices within the system or may be input by the student or therapist.

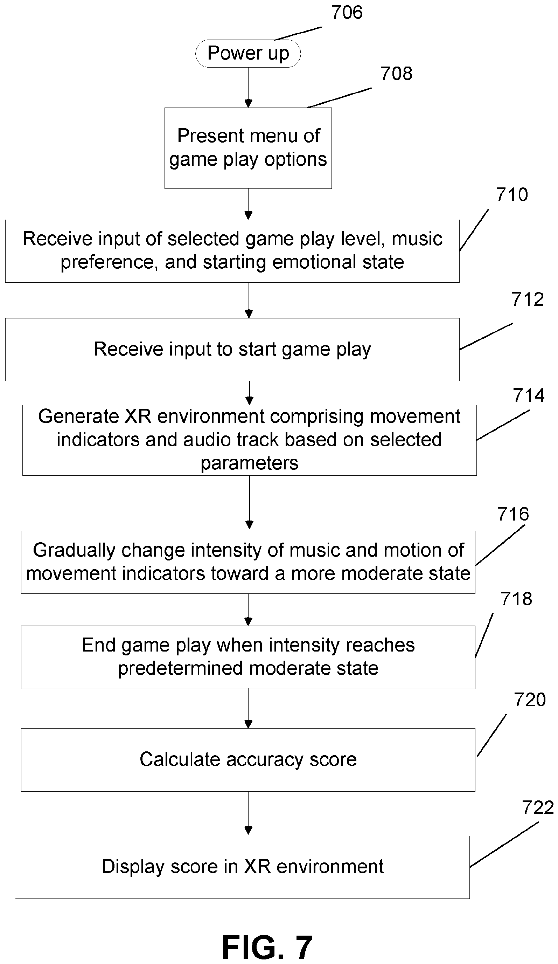

FIG. 7 is a flowchart illustrating one possible treatment course for purposes of example. At step 706, the system is powered on. At step 708, the system generates a menu in the XRUI presenting to the user using the XR headset (or other XR equipment) one or more selectable game play options. These options may include such parameters as game play difficulty level, type of music, volume of music and/or sound effects, and starting emotional state, for instance.

Next, at step 710, the system receives the user's selections for the one or more game play parameters.

At step 712, the system receives an indication from the user to commence game play. The user interface for allowing the user to enter the indication to commence game play may be in the same interface in which the game play options are presented to the user or may be presented in a second user interface that is shown after the game play options are selected. Also, in some embodiments, a third person, such as an instructor, may enter the game play options and/or the indication to commence game play through a remote control type device or any other form of user interface (e.g., a laptop or desktop computer connected to the system). In step 714, the system generates an XR environment such as described herein above having the game play parameters set forth through the process of steps 708 and 710 above.

In step 716, the intensity-related parameters of game play (e.g., tempo of the music, volume of the sounds, harshness of the music, speed of the movement indicators, range of motion of the movement indicators, etc.) are gradually changed over time to slowly bring the game play intensity toward a more moderate level of intensity. It will be understood that step 716 is a continuous process that occurs over a predetermined time period.

At step 718, game play is ended when the level of intensity reaches the predetermined desired moderate level.

This period may be highly dependent on the particular individual who is being treated as well as that individual's beginning state, but typically may be in the range of about 5 to 15 minutes. In fact, the beginning level of game play intensity also may be dependent on the individual's beginning emotional state. While the desired ending intensity level will be fairly uniform for most cases, it also is possible that the desired ending intensity level of game play may depend on the particular individual or, at least, the activity for which the individual is being prepared. For example, if the individual is being prepared to play a sport, the desired ending emotional state (and thus level of game play intensity) may be quite different than if the individual was being prepared for attending a math class.

At step 720, the system may calculate an accuracy score such as previously described.

At step 722, the system may display the accuracy score to the user in the XR environment and/or to an instructor (e.g., via a remote device that includes a display module or a laptop or desktop computer connected to the system).

### Specific Examples

In one specific exemplary embodiment, the student may either stand or sit while wearing the audio/video XR headset while holding a controller in each hand.

In embodiments, the system may present a variable number of gameplay levels for playing, which may be associated with different musical recordings, and may contain different collections of movement indicators, and may require different levels of skill to play.

The provider, while supervising, can make choices about the direction of the game play using any suitable user interface device, such as a physical remote-control device, a remote-control app loaded onto a cellular telephone or tablet computing device, etc. For instance, the remote control may provide buttons or touch screen buttons or menus for changing the level of game play, volume of sound effects and/or music, choice of sound effects and/or music, inclusion of percussive movements or not in the game play, etc.

In some embodiments, the movements that the user must follow may be designed so that there is no need for the user to move from a relatively stationary position in the real world.

In other embodiments, the movements may be designed so that the user may be required to move to reach the movement indicators. For instance, movement indicators that are to be followed by the user's hands may be designed to move so that the user must step sideways to reach the movement indicator. Other examples include (1) dual hand movement indicators where the two movement indicators cross over each other's paths so that the user may have to cross his/her feet over or turn sideways to follow the movement indicators, (2) rapid up/down motions that require the user to jump to reach the movement indicator(s), and (3) movement indicators that the user is supposed to follow with his/her feet rather than hands.

### Conclusion

The afore-described methods and apparatus address a number of common challenges relating to emotional regulation when working with neurodiverse populations. Its therapeutic applications can provide a bridge to help neurodiverse populations become emotionally regulated so they may remain calm and cognitively focused and able to attend, attune, and optimally participate in a given task.

Having thus described a few particular embodiments of the invention, various alterations, modifications, and improvements will readily occur to those skilled in the art. Such alterations, modifications and improvements as are made obvious by this disclosure are intended to be part of this description though not expressly stated herein, and are intended to be within the spirit and scope of the invention. Accordingly, the foregoing description is by way of example only, and not limiting. The invention is limited only as defined in the following claims and equivalents thereto.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs).

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the exemplary embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost vs. efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), quantum computer, and/or a state machine.

The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

It is also to be understood that the terminology used herein is for the purpose of describing particular embodiments only, and is not intended to be limiting.

In certain representative embodiments, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc.).

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B." Further, the terms "any of' followed by a listing of a plurality of items and/or a plurality of categories of items, as used herein, are intended to include "any of," "any combination of," "any multiple of," and/or "any combination of multiples of' the items and/or the categories of items, individually or in conjunction with other items and/or other categories of items. Moreover, as used herein, the term "set" or "group" is intended to include any number of items, including zero. Additionally, as used herein, the term "number" is intended to include any number, including zero.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 items refers to groups having 1, 2, or 3 items. Similarly, a group having 1-5 items refers to groups having 1, 2, 3, 4, or 5 items, and so forth.

Moreover, the claims should not be read as limited to the provided order or elements unless stated to that effect. In addition, use of the terms "means for" in any claim is intended to invoke 35 U.S.C. §112, ¶ 6 or means-plus-function claim format, and any claim without the terms "means for" is not so intended.

Although the invention is illustrated and described herein with reference to specific embodiments, the invention is not intended to be limited to the details shown. Rather, various modifications may be made in the details within the scope and range of equivalents of the claims and without departing from the invention.

Throughout the disclosure, one of skill understands that certain representative embodiments may be used in the alternative or in combination with other representative embodiments.

## Claims

1. A computer-readable device comprising non-transitory instructions, which, when executed by a processor, cause the processor to perform operations, the operations comprising:
generating an extended reality user interface (XRUI);
tracking movement of at least one body part of a user in space;
generating in the XRUI a follow marker, the follow marker comprising a representation of the movement of the tracked user's body part; and
generating in the XRUI a movement indicator, the movement indicator comprising a representation of a moving target within the XRUI;
wherein motion of the movement indicator is configured to gradually transition over time from a first level of intensity to a second level of intensity.

2. The computer-readable device of claim 1 wherein the level of intensity of the motion of the movement indicator comprises at least one of (1) a range of required movement of a user of the device to follow the movement indicator with the tracked body part, (2) a speed required of the user of the device to follow the movement indicator with the tracked body part, and (3) a variety of different types of motions required of the user to follow the movement indicator with the body part.

3. The computer-readable device of claim 1 wherein the level of intensity is gradually decreased over time from a relatively higher intensity level to a relatively lower intensity level.

4. The computer-readable device of claim 1 wherein the first level of intensity is configured to correspond to a relatively higher intensity emotional state of a user, and the second level of intensity is configured to correspond to a relatively lower intensity emotional state of a user, wherein the relative lower intensity emotional state is a regulated emotional state conducive to focus and calmness.

5. The computer-readable device of claim 1 wherein the operations further comprise:
including an audio track within the XRUI and wherein the audio track is gradually varied in intensity over time in synchronicity with the motion of the movement indicator.

6. The computer-readable device of claim 5 wherein the audio track comprises music that is gradually varied in intensity over time in synchronicity with the movement of the movement indicator.

7. The computer-readable device of claim 1 wherein the operations further comprise:
calculating an average distance between the follow marker and the movement indicator in the XRUI over a period of time; and
determining a follow success value indicative of the ability of the user to follow the movement indicator with the follow marker over the period of time.

8. The computer-readable device of claim 1 wherein the operations further comprise:
gradually varying the motion of the movement indicator so as to increase a level of skill required of the user to follow the movement indicator.

9. An apparatus for assisting a user in transitioning from an unregulated emotional state to a regulated emotional state comprising:
an extended reality render module configured to generate an extended reality user interface (XRUI), the XRUI comprising a movement indicator, the movement indicator comprising a representation of a moving target within the XRUI;
a tracking module configured to track movement of a sensor in space;
a motion module configured to generate in the XRUI a follow marker, the follow marker comprising a representation of the movement of the sensor in space; and
wherein motion of the movement indicator is configured to gradually transition over time from a first level of intensity to a second level of intensity.

10. The apparatus of claim 9 wherein the extended reality render module generates the movement indicator by using the tracking module to track a path of a sensor in space and creates the motion of the movement indicator by emulating the tracked movement of the sensor.

11. A method for guiding individuals to an emotionally regulated focused state, the method comprising:
generating an extended reality user interface (XRUI);
tracking movement of at least one body part of a user in space;
generating in the XRUI a follow marker, the follow marker comprising a representation of the movement of the tracked user's body part;
generating in the XRUI a movement indicator, the movement indicator comprising a representation of a moving target moving in a curvilinear path within the XRUI; and
wherein motion of the movement indicator is configured to gradually transition over time from a first level of intensity to a second level of intensity.

12. The method of claim 11 wherein the level of intensity of the motion of the movement target comprises at least one of (1) a range of required movement of a user of the device to follow the movement indicator with the tracked body part, (2) a speed required of the user of the device to follow the movement indicator with the tracked body part, and (3) a variety of different types of motions required of the user to follow the movement indicator with the body part.

13. The method of claim 11 wherein the first level of intensity corresponds to a relatively high intensity unregulated emotional state of a user and the second level of intensity corresponds to a regulated emotional state conducive to focus and calmness.

14. The method of claim 11 further comprising:
including an audio track within the XRUI and wherein the audio track is gradually varied in intensity over time in synchronicity with the motion of the movement indicator.

15. The method of claim 11 further comprising:
calculating an average distance between the follow marker and the movement indicator in the XRUI over a period of time; and
determining a follow success value indicative of the ability of the user to follow the movement indicator with the follow marker over the period of time.
